# EUROPEAN PATENT APPLICATION

(11) **EP 3 681 194 A1**
(43) Date of publication of application: **15.07.2020**
(21) Application number: 19200097.4
(22) Date of filing: 27.09.2019
(51) Int. Cl.: H04W 24/08, H04W 8/22

(54) **METHOD FOR CALIBRATING POSITIONING FINGERPRINT DATABASE BY UTILIZING SIGNALING MONITORING TECHNOLOGY**

(30) Priority: 08.01.2019 CN 201910014205
(71) Applicant: Beijing Zhongchuang Telecom Test Co., Ltd, Beijing (CN)
(72) Inventor: Zhifeng, Wang, Beijing (CN)
(74) Representative: AWA Sweden AB

(57) **Abstract**

The present invention discloses a method for calibrating a positioning fingerprint database by utilizing a signaling monitoring technology, comprising the following steps: step 1, accessing, acquiring and parsing a corresponding interface in a mobile communication network by monitoring, acquiring and parsing a signaling; step 2, filtering out an OTT service record with longitude and latitude information; step 3, associating the OTT service record with longitude and latitude information with a corresponding measurement report, and generating effective fingerprint information; and step 4, placing the fingerprint information generated in step 3 in the positioning fingerprint database, and calibrating the fingerprint database. With the above-described method, the present invention can solve the positioning fingerprint database coverage area and real time updating problems, thus greatly improving the accuracy and real time performance of the positioning fingerprint database.

## Description

### Technical Field

The present invention relates to the technical field of telecommunication operation, in particular to a method for calibrating a positioning fingerprint database by utilizing a signaling monitoring technology.

### Background Art

In wireless network optimization, an MR (measurement report) can be acquired by means of hard acquisition or soft acquisition. The MR report contains a serving cell RSRQ (a wireless signal strength) and a neighboring cell RSRQ, but does not contain longitude and latitude information. However, once a positioning fingerprint database is provided, the wireless signal strength and other information in the MR report can be used to find the closest "fingerprint" in the positioning fingerprint database according to a certain algorithm as the longitude and latitude of the MR report.

In a mobile communication positioning solution, a positioning fingerprint database construction method is provided. The current technical solution is: a road tester carries a road test terminal, and performs field mobile test in an area where a fingerprint database is required to be constructed; and the road test terminal saves the RSRQ (reference signal receiving quality, a wireless signal strength) and longitude and latitude information of each point in the passing area in the positioning fingerprint database as a fingerprint.

Existing technical solutions mainly have the following defects:
The sampling points acquired with the manual road test method cannot cover a wide area; and the fingerprint samples in the positioning fingerprint database are few;
Due to the environmental changes such as base station adjustment, on-site buildings and the like, if the "fingerprints" in the positioning fingerprint database are not periodically updated, then the matching accuracy of the fingerprint database will be greatly reduced.

### Summary of the Invention

The object of the present invention is to provide a method for calibrating a positioning fingerprint database by utilizing a signaling monitoring technology, so as to solve the problem that the sampling points acquired with the existing manual road test method cannot cover a wide area, and the fingerprint samples in the positioning fingerprint database are few. In addition, the present invention can also solve the following problem: due to the environmental changes such as base station adjustment, on-site buildings and the like, if the "fingerprints" in the positioning fingerprint database are not periodically updated, then the matching accuracy of the fingerprint database will be greatly reduced.

To achieve the above object, the present invention provides the following technical solution:
A method for calibrating a positioning fingerprint database by utilizing a signaling monitoring technology, comprising the following steps:
   Step 1, accessing, acquiring and parsing a corresponding interface in a mobile communication network by monitoring, acquiring and parsing a signaling;
   Step 2, filtering out an OTT service record with longitude and latitude information;
   Step 3, associating the OTT service record with longitude and latitude information with a corresponding measurement report, and generating effective fingerprint information; and
   Step 4, placing the fingerprint information generated in step 3 in the positioning fingerprint database, and calibrating the fingerprint database.

Further, as a preferred technical solution, the specific process of the step 1 is: accessing and acquiring a corresponding interface in an LTE network, and parsing an acquired http code stream.

Further, as a preferred technical solution, in the step 2, a positioning OTT application is adopted to filter out the OTT service record with longitude and latitude information.

Further, as a preferred technical solution, in the step 2, the longitude and latitude information is acquired from a URI in the get mode of an http request.

Further, as a preferred technical solution, in the step 2, the information pertaining to various common key fields of the longitude and latitude information is acquired through different OTT applications.

Further, as a preferred technical solution, in the step 3, the OTT service record with longitude and latitude information is associated with the measurement report by means of time and MME UE S1AP ID.

Further, as a preferred technical solution, in the step 4, the generated fingerprint information comprises a serving cell RSRP1, a neighboring cell RSRP2, and a neighboring cell RSRP3; and the fingerprint database divides geographic locations into length and wide fixed grids for maintenance, acquires the serving cell RSRP1, the neighboring cell RSRP2, and the neighboring cell RSRP3 from the new sample fingerprint information, then places in corresponding grids, performs average and calibration calculation together with the original samples, and generates new grid fingerprints.

Compared with the prior art, the present invention has the following advantages:
(1) The present invention acquires longitude and latitude information in an OTT service by monitoring a signaling; all the service records satisfying a requirement in the monitoring range can be treated as sampling samples, namely the present invention acquires samples in an overall road test manner, and can persistently acquire a large amount of "fingerprint" information, thus solving the sample coverage area problem of the positioning fingerprint database.
(2) The present invention can persistently acquire samples by monitoring a signaling, and can constantly perfect, update and calibrate the positioning fingerprint database, thus greatly improving the accuracy and real time performance of the fingerprint database.

### Brief Description of the Drawings

Fig. 1 is a flow chart of the method according to the present invention; and
Fig. 2 shows the content of a URI in an OTT application.

### Detailed Description of Embodiments

The present invention will be further described in detail hereafter in combination with embodiments and the drawings. However, the embodiments of the present invention are not limited to the embodiments described herein.

### Embodiment

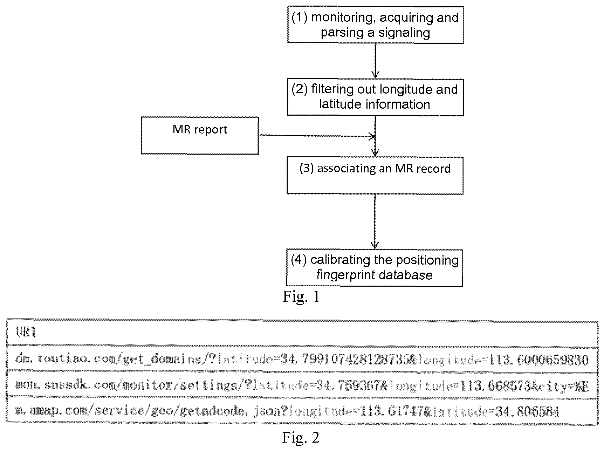

As shown in Fig. 1, the method for calibrating a positioning fingerprint database by utilizing a signaling monitoring technology according to the embodiment specifically comprises the following steps:
Step 1, accessing, acquiring and parsing a corresponding interface in a mobile communication network by monitoring, acquiring and parsing a signaling; Specifically, for example, in an LTE network, an S1-U interface is required to be accessed, acquired and parsed; in order to parse an http code stream therein, a positioning OTT application is required, wherein OTT is an abbreviation of over the top which means to provide various application services for a user over the Internet; one typical OTT application is an application store, such as AppStore of the Apple, the Google Play of the Google and the like; an http request generally have two common modes, namely get and post; in the get mode, the longitude and latitude would be displayed in the URI in a plain text manner; and in the post mode, positioning information would be reported in an encrypted manner. Therefore, in the present invention, the longitude and latitude information is acquired from the URI in the get mode. Fig. 2 shows the URI content in a certain application, wherein the URI content comprises longitude and latitude information.
Step 2, filtering out an OTT service record with longitude and latitude information; The key fields of the longitude and latitude information carried in the URI are different in different OTT applications; therefore, the common key field information is required to be found through constant authentication. Table 1 shows the key fields of common longitude and latitude information.

**Table 1 Key fields of common longitude and latitude information**

| No. | Key field |
|---|---|
| 1 | longitude=&"latitude=" |
| 2 | lng=&"lat=" |
| 3 | lon=&"lat=" |
| 4 | slon=&"slat=" |
| 5 | lotid=&"latid=" |
| 6 | cdma_lng=&"cdma_lat" |
| 7 | location= |
| 8 | position= |
| 9 | x=&"y=" |
| 10 | q= |

Step 3, associating the OTT service record with longitude and latitude information with a corresponding measurement report, and generating effective fingerprint information; and in the LTE network, the main association rules between the two are time and MME UE S1AP ID; in a normal service process, the MME UE S1AP ID retains unchanged, and is contained in both MR data and signaling data. Therefore, the association between the MR and the signaling service record can be realized via time and the MME UE S1AP ID.
Step 4, placing the fingerprint information generated in step 3 in the positioning fingerprint database, and calibrating the fingerprint database; the fingerprint information generally comprises a serving cell RSRP1, a neighboring cell RSRP2, and a neighboring cell RSRP3, wherein RSRP (reference signal receiving power) is one of a physical layer measurement requirement and the key parameters representing wireless signal strength in an LTE network, and is an average value of the signal powers received by all the resource elements (RE) for bearing a reference signal in a certain symbol, the fingerprint database divides geographic locations into length and wide fixed (for example, 50m*50m) grids for maintenance, acquires the serving cell RSRP1, the neighboring cell RSRP2, and the neighboring cell RSRP3 from the new sample fingerprint information, then places in corresponding grids, performs average and calibration calculation together with the original samples, and generates new grid fingerprints.

With the constant increase of samples, the fingerprint database would be more and more accurate. In a wireless network application, a cell and RSRP information are placed in the fingerprint database for matching, then a grid fingerprint with an optimum matching degree is found, and finally corresponding longitude and latitude information is acquired.

With the above-described method, the present invention acquires the longitude and latitude information in the OTT service by monitoring a signaling; all the service records satisfying a requirement in the monitoring range can be treated as sampling samples, namely the present invention acquires samples in an overall road test manner, and can persistently acquire a large amount of "fingerprint" information, thus solving the sample coverage area problem in existing solutions. In addition, samples can be persistently acquired by monitoring a signaling, and the positioning fingerprint database can be constantly perfected, updated and calibrated, thus greatly improving the accuracy and real time performance of the fingerprint database.

As described above, the present invention can be better realized.

The descriptions above are only preferred embodiments of the present invention, and are not intended to limit the present invention in any form. And any simple modifications, equivalent substitutions and improvements made to the above-described embodiments on the basis of the technical essence of the present invention within the spirit and principles of the present invention shall still be concluded in the protection scope of the technical solution of the present invention.

## Claims

1. A method for calibrating a positioning fingerprint database by utilizing a signaling monitoring technology, comprising the following steps:
step 1, accessing, acquiring and parsing a corresponding interface in a mobile communication network by monitoring, acquiring and parsing a signaling;
step 2, filtering out an OTT service record with longitude and latitude information;
step 3, associating the OTT service record with longitude and latitude information with a corresponding measurement report, and generating effective fingerprint information; and
step 4, placing the fingerprint information generated in step 3 in the positioning fingerprint database, and calibrating the fingerprint database.

2. The method for calibrating a positioning fingerprint database by utilizing a signaling monitoring technology according to claim 1, wherein the specific process of the step 1 is: accessing and acquiring a corresponding interface in an LTE network, and parsing an acquired http code stream.

3. The method for calibrating a positioning fingerprint database by utilizing a signaling monitoring technology according to claim 2, wherein in the step 2, a positioning OTT application is adopted to filter out the OTT service record with longitude and latitude information.

4. The method for calibrating a positioning fingerprint database by utilizing a signaling monitoring technology according to claim 3, wherein in the step 2, the longitude and latitude information is acquired from a URI in the get mode of an http request.

5. The method for calibrating a positioning fingerprint database by utilizing a signaling monitoring technology according to claim 4, wherein in the step 2, the information pertaining to various common key fields of the longitude and latitude information is acquired through different OTT applications.

6. The method for calibrating a positioning fingerprint database by utilizing a signaling monitoring technology according to claim 1, wherein in the step 3, the OTT service record with longitude and latitude information is associated with the measurement report by means of time and MME UE S1AP ID.

7. The method for calibrating a positioning fingerprint database by utilizing a signaling monitoring technology according to claim 1, wherein in the step 4, the generated fingerprint information comprises a serving cell RSRP1, a neighboring cell RSRP2, and a neighboring cell RSRP3; and the fingerprint database divides geographic locations into length and wide fixed grids for maintenance, acquires the serving cell RSRP1, the neighboring cell RSRP2, and the neighboring cell RSRP3 from the new sample fingerprint information, then places the same in corresponding grids, performs average and calibration calculation together with the original samples, and generates a new grid fingerprint.
